Europäisches Patentamt

European Patent Office

Office européen des brevets

(11) Publication number: **0 422 721 A1**

# EUROPEAN PATENT APPLICATION

(21) Application number: 90202612.9

(51) Int. Cl.⁵: **A01B 59/048, A01B 73/04**

(22) Date of filing: 02.10.90

(30) Priority: 10.10.89 NL 8902512
08.11.89 NL 8902757
16.11.89 NL 8902833

(43) Date of publication of application:
**17.04.91 Bulletin 91/16**

(84) Designated Contracting States:
**DE FR GB NL**

(71) Applicant: C. van der Lely N.V.
Weverskade 10 P.O. Box 26
NL-3155 ZG Maasland(NL)

(72) Inventor: **Bom, Cornelis Johannes Gerardus**
**16 Laan van Nieuw Rozenburg**
**NL-3181 VC Rozenburg(NL)**
Inventor: **Lekkerkerk, Jacob**
**23 Wilgenlaan**
**NL-2761 TK Zevenhuizen(NL)**

(74) Representative: **Mulder, Herman et al**
**Octrooibureau Van der Lely N.V. Weverskade**
**10 P.O. Box 26**
**NL-3155 ZG Maasland(NL)**

(54) Agricultural implement, in particular a soil cultivating machine.

(57) An agricultural implement comprises a frame including a first frame portion (4) that can be coupled to a tractor (1) and a second frame portion (8) that is pivotable with respect to the first frame portion (4). The second frame portion carries a soil working member (2) and is lockable by means of an adjusting cylinder (63) and a locking mechanism (70, 72) in a first semi-lifted position and in a transport position. By adjustment of the adjusting cylinder (63), the locking mechanism (70, 72; 61, 67) can be brought into the operative or inoperative state.

FIG. 2

EP 0 422 721 A1

## AN AGRICULTURAL IMPLEMENT, IN PARTICULAR A SOIL CULTIVATING MACHINE

The invention relates to an agricultural implement, in particular a soil cultivating machine, comprising a frame which includes a first frame portion that can be coupled to a tractor and a second frame portion that is pivotable with respect to the said first frame portion and carries at least one soil working member, the said second frame portion being lockable by means of an adjusting member and a locking mechanism in at least one position relative to the said first frame portion.

In prior art agricultural implements of this type, the locking mechanism can be operated from the tractor via members especially provided for the purpose of locking and unlocking, respectively, of the relevant frame portion. Now, the construction according to the invention can provide a significant simplification in that the adjusting member includes means, by means of which the locking mechanism can be operated, the arrangement being such that an adjustment of the adjusting member can bring the locking mechanism into the operative or the inoperative state. By means of this provision it is possible to obtain a compact and reliable adjusting and locking mechanism combined into an integral whole, while no separate control members for the locking mechanism are required.

For a better understanding of the present invention and to show how the same may be carried into effect reference will now be made, by way of example, to the accompanying drawings of some advantageous embodiments, in which drawings:

Figure 1 is a schematic view of an implement in accordance with the invention, the implement being arranged at the front side of a tractor;

Figure 2 is, to an enlarged scale, a view taken on the line II-II in Figure 1;

Figure 3 shows, to an enlarged scale, the adjusting cylinder and locking mechanism combination in accordance with the invention;

Figure 4 is a view taken in the direction of the arrow IV in Figure 3;

Figure 5 shows the manner in which the lock of the locking mechanism is actuated;

Figure 6 shows the resultant locking;

Figure 7 shows, to an enlarged scale, the support of a stepper wheel for driving a dosing mechanism of a seed drill forming part of the implement;

Figure 8 is a schematic view of an agricultural implement, in this case a mowing machine, in which the adjusting cylinder and locking mechanism combination according to the invention is employed;

Figure 9 shows, to an enlarged scale, the mounted adjusting/locking mechanism according to the invention;

Figure 10 shows a third embodiment of an agricultural implement, in which the adjusting mechanism/locking mechanism according to the invention is employed;

Figure 11 shows, to an enlarged scale, the manner in which the adjusting/locking mechanism is mounted in the implement shown in Figure 10.

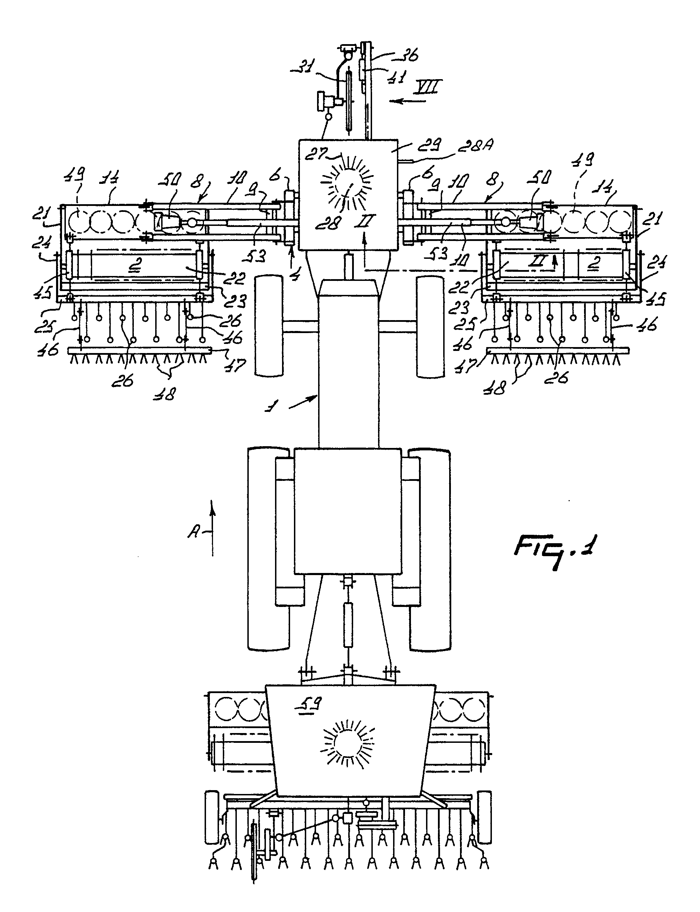

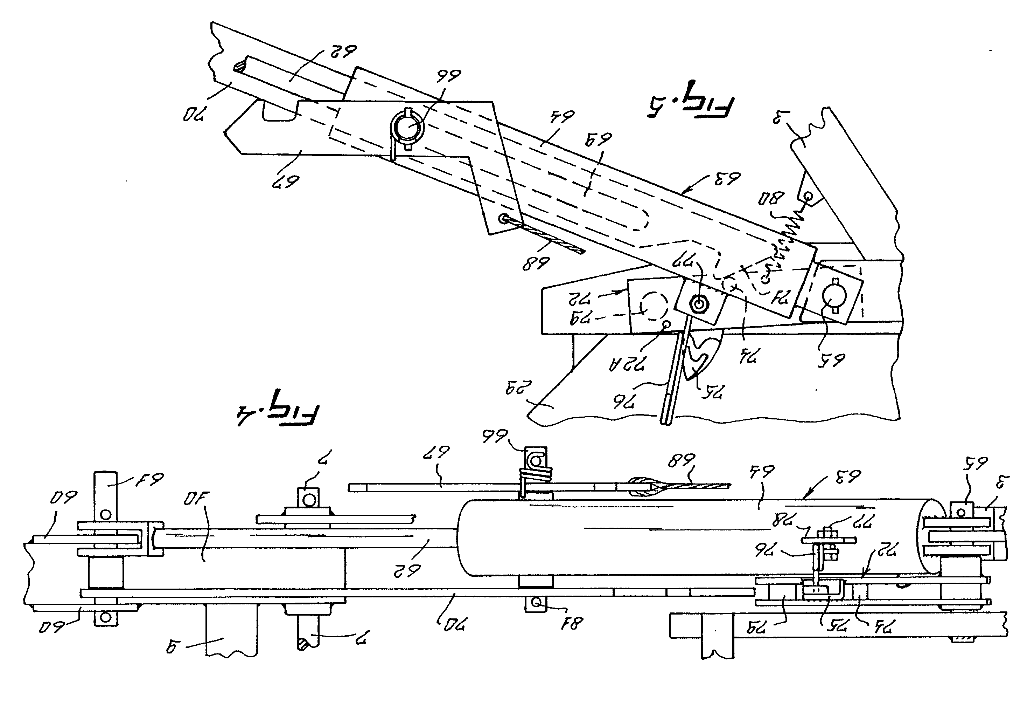

The implement in accordance with the invention as shown in Figures 1 to 6 relates to an agricultural implement, in particular one for preparing a seed bed and simultaneously introducing seed into the ground.

The implement shown is attached to the lifting hitch at the front side of a tractor 1 and includes two soil working and seed drilling units 2 arranged on both sides of the tractor in the region of the front wheels. Both units 2, each of which during operation cultivates a strip of soil beside the tractor, are arranged at a frame which, by means of a trestle 3 having a three-point connection, is fastened to the three-point lifting hitch at the front side of the tractor 1. The frame includes a central frame portion 4 on which the trestle 3 is fitted. The frame portion 4 comprises two beams 5 which extend at least substantially parallel to each other and are located at least substantially horizontal. The beams 5 are interconnected via connecting beams 6 which extend in the direction of operative travel A. By means of shafts 7 which extend in the direction of operative travel A and are in alignment, pivotal frame portions 8 are fitted to the beams 6. Each frame portion 8 includes a beam 9 which extends in the direction of operative travel A and to which, near the shafts 7, there are arranged two parallel beams 10 extending parallel to the beams 5. At its end facing away from the frame portion 4, each of the beams 10 is provided with a fork 11. Between the legs of each fork 11 there is arranged a box-like frame portion 14 by means of supports 12 and shafts 13. The shafts 13 are in alignment and extend in the direction of operative travel A. The box-like frame portion 14 extends at least substantially parallel to the beams 10 of the frame portion 8 and is part of a soil working and seed drilling unit 2. The shafts 13 are provided near the centre of each support 12. Each support 12 is arranged not in the centre of the box-like frame portion 14, but slightly towards the side of the frame portion 4.

Inside the frame portion 14 there are bearing-supported at equal interspaces of preferably 25 cms, six upwardly extending, preferably vertical, shafts 15 of soil working members 16. At the end of a shaft 15 projecting from the bottom side of the frame portion 14, each of the soil working members 16 includes a carrier 17, said carrier having near its ends downwardly extending soil working elements 18 in the form of tines. The ends of each box-like frame portion 14 are closed by means of plates 19 which extend upwardly and at least substantially parallel to a vertical plane in the direction of operative travel A. Near their leading sides, the plates 19 are fitted with a shaft 20, The arrangement being such that the longitudinal centre lines of the shafts are in alignment. About each of the shafts 20 there is arranged an arm 21 which extends rearwardly along a plate 19. Between the ends of the arms 21 there is supported freely rotatably a roller 22. The arms 21 can be adjusted in height and be locked in a plurality of positions by means of a (non-shown) adjusting device arranged near the rear side of the plates, the arrangement being such that by means of the roller 22 the working depth of the soil working members 16 is determined.

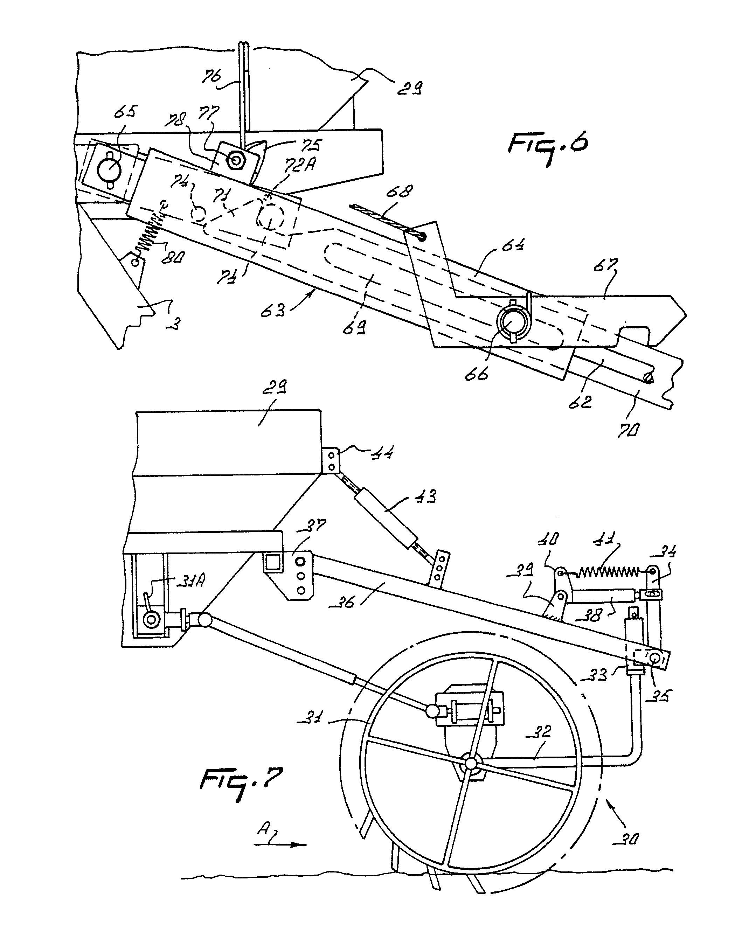

In this embodiment, the rollers 22 are in the form of packer rollers which at their rear sides are provided with scrapers extending between the crowns of cams and being connected to a cross beam 23. Behind the cross beam 23 there is arranged a carrier 25 by means of arms 24 which are pivotal about a shaft located on the arms 21, on which carrier 25 seed coulters 26 are supported pivotably. The seed coulters 26 are connected via tubes 27 to a distributing mechanism 28 of a common seed drill, the hopper 29 of which is mounted on the frame portion 4. In addition, on the frame portion 4 there is arranged a fan 30 which can be driven from the power take-off shaft at the front side of the tractor 1 via a drive to be described in detail hereinafter. Furthermore, there is provided a (non-shown) dosing mechanism, through which the seed material can be fed by the fan 30 from the hopper 29 to the distributing mechanism 28, to which the tubes are connected and which is positioned on the upper side of the hopper. The dosing mechanism is driven in a known per se manner via a front-mounted stepper wheel 31 which moves over the soil during operation. In order to be able to establish whether the stepper wheel 31 is actually moving, the drive transmission includes an indicator means 31A which rotates during operation and is visible from the tractor (Figure 7). The stepper wheel 31 is rotatably supported by means of a shaft at the end of a forwardly extending arm 32 which, in front of the stepper wheel, is folded upwardly at a square angle in the symmetry plane of the tractor 1 (Figure 7). The upper end of the arm 32 is freely movable in a vertically extending bushing 33. The bushing 33 is supported by an arm 34 which is pivotable relative to a carrier 36 about a shaft 35 extending transversely to the direction of operative travel A, which carrier 36 is arranged pivotably between lugs 37 located at the leading side of the hopper 29. The arm 34 can be adjusted relative to The lugs 37 in three positions (Figure 7). Above its centre, the upwardly extending arm 34 is connected hingeably in a slot to a hydraulic adjusting cylinder 38, the other end of which is connected hingeably between the lugs 39 on the carrier 36. At the side of the lugs 39, the adjusting cylinder 38 is provided with an upwardly extending ear 40 having hooked therein the one end of a tensile spring 41, the other end of which is hooked in a bore near the top end of the arm 34. At its upper side, the carrier 36 is furthermore provided with an ear 42 having arranged therein the one end of a length-adjustable limiter member 43, the other end of which is connected to a lug 44 at the hopper 29, the arrangement being such that hereby the position of the arm 34 can be adjusted.

At the upper side of each carrier 25, near the ends, there is provided a support which by means of a length-adjustable rod 45 is connected pivotably to a support on the trailing side, near the ends, of the box-like frame portion 14, the arrangement being such that, when the roller 22 is adjusted, the appropriate position of the seed coulters 26 can be set again. At some distance from the ends, each carrier 25 is fitted with a rearwardly extending, hinging arm 46. Between the ends of the arms 46 there is arranged pivotally by means of transverse shafts a carrier 47, which carrier is provided with downwardly directed, flexible tines 48. The tines 48 ensure that the furrows made by the seed coulters 26 are covered.

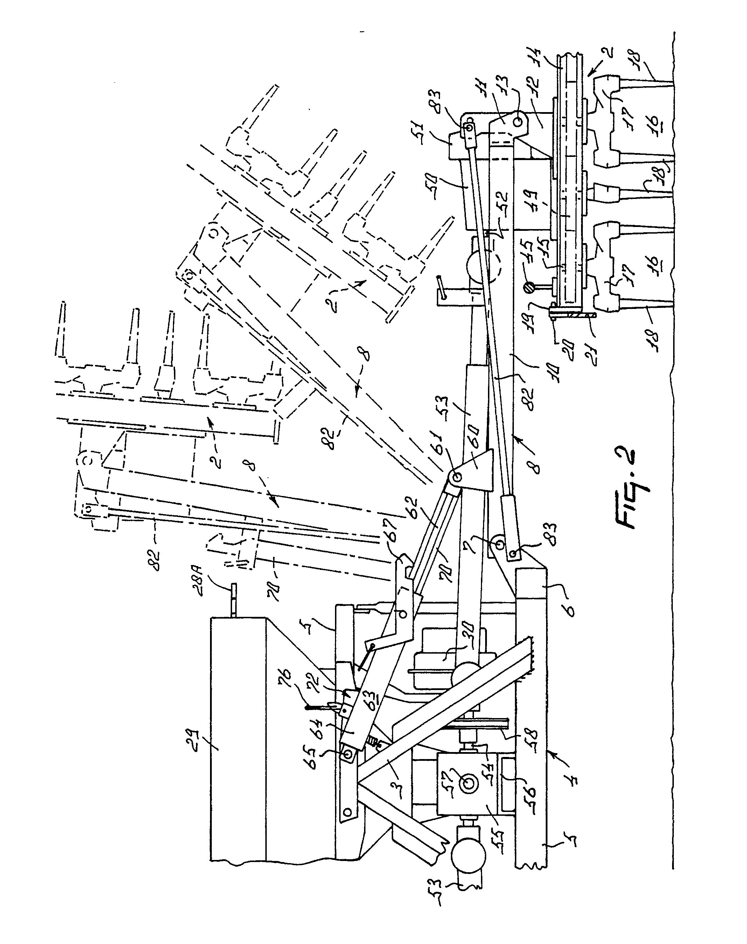

Inside each box-like frame portion 14 of a unit 2, a straight-toothed gear wheel 49 is mounted on the shafts 15 of the soil working members 16, the arrangement being such that the gear wheels 49 on the shafts 15 of adjacent soil working members 16 are in driving connection with each other. The shaft 15 of the second soil working member 16, taken from the frame portion 4, is extended upwardly and reaches to into a gear box 50 on the upper side of the frame portion 14. Inside the gear box 50, the extension is in driving connection via a bevel gear transmission with a shaft which extends transversely to the direction of operative travel A and is supported in the gear box, the said shaft being in driving connection via a speed variator 51 located at the outside of the gear box with a superjacent shaft 52 projecting from the gear box at the inner side thereof (Figure 2). The projecting end of the shaft 52 is connected via a telescopic shaft 53 to a transverse shaft 54. The shaft 54 is bearing-supported in a gear box 55 mounted on the frame portion 4 by means of a support 56 (Figure 2). The shaft 54 is connected via a bevel gear transmission to a shaft 57 which extends in the direction of operative travel A and is connected via an intermediate shaft to the power take-off shaft at the front side of the tractor. Taken in the direction of operative travel, at the right-hand side of the gear box 55, the shaft 54 is fitted with a pulley 58, around which a belt is passed to drive the fan 30. The spacing between the strips of soil to be cultivated by the soil cultivating-seed drill units 2 on either side of the tractor is such that it corresponds to the customary working width (in this case 3 metres) of a soil cultivating machine combined with a seed drill, which combination 59 can be hitched to the rear side of the tractor by means of a three-point lifting hitch (Figure 1).

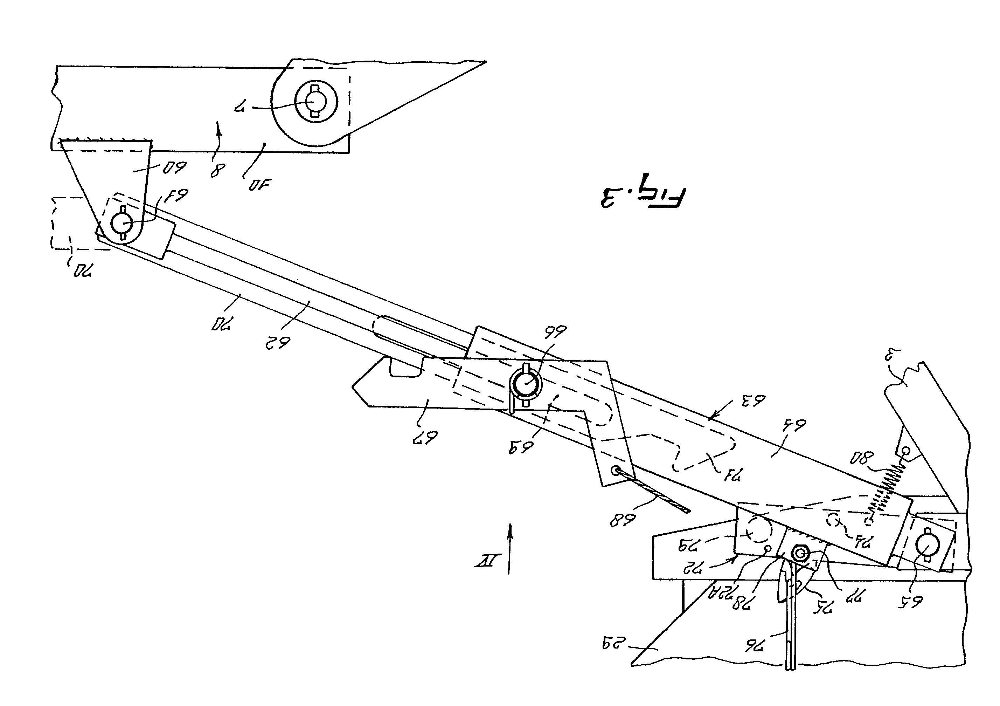

At some distance from the shafts 7, the rear beam 10 of each frame portion 8 is provided with two upwardly extending lugs 60. By means of a shaft 61 extending in the direction of operative travel A there is arranged between the lugs 60 the end of the piston rod 62 of an adjusting member, preferably in the form of a single-acting hydraulic adjusting cylinder 63. The housing 64 of the hydraulic adjusting cylinder 63 is connected pivotably to the upper side of the coupling trestle 3 by means of a shaft 65 extending in the direction of operative travel A. Near its end where the piston rod 62 is located, the housing 64 of the adjusting cylinder 63 is fitted with stubs 66 which are in alignment. About the, taken in the direction of operative travel, front stub 66 there is pivotal a locking member 67, which member is kept in the position shown in Figures 2 and 3 under spring action. By means of a tensile member 68, the locking member 67 can be pivoted from the tractor against the action of a spring. The other stub 66 extends to into a slot 69 in an operating arm 70, the one end of which arm is arranged pivotally and laterally movably under spring action about the shaft 61. The other end of the arm 70 is provided with a bevelled, upwardly extending hook-like portion 71 (Figure 3). The operating arm 70 forms part of a locking mechanism which furthermore includes a locking member 72, which member is pivotal about the shaft 65 extending in the direction of operative travel A and bearing the housing 64 of the adjusting cylinder 63. The locking member 72 is formed by two spaced apart strips, between which, at the bottom side near the centre, there is arranged a pin 74 which constitutes a stop with which the bevelled leading side of the hook-like portion 71 of the operating arm 70 can cooperate. At its upper side, the locking member 72 is fitted with a blocking member 75 which is provided at one side with an inverted V-shaped recess (Figure 3). In the recess fits the squarely folded-over end of an upwardly extending portion of a blocking element 76 in the form of a spring. The upwardly extending portion of the spring 76 is structured as an integral whole with two adjacent turns and a downwardly extending portion which by means of a bolt 77 is bolted to a support 78 on the upper side of the housing 64 of the hydraulic adjusting cylinder 63. At its end facing away from the shaft 65, The locking member 72 is provided with a pin 79 with which in a manner to be described hereinafter the hook-like portion 71 of the operating arm 70 can cooperate for locking, in a semi-lifted position, a frame portion 8 and the unit 2 attached thereto (Figure 2). Between the bottom side of the locking member 72 and the trestle 3 there is arranged a tensile spring 80.

The implement according to the invention as described in the foregoing operates as follows.

During operation, the entire assembly of tractor and units 2 can be moved in a direction indicated by the arrow A, the drive for the soil cultivating members, which, in this embodiment, constitute a rotary harrow, and the drive for the fan 30 of the seed drill on the frame portion 4 being derived from the power take-off shaft at the front side of the tractor. During travel, the soil is worked by the tines 18 of the soil working members 16 of the rotary harrows of the respective units 2 to a depth determined by means of the roller 22 over a width of 1.5 metres and seed material is introduced directly into the worked soil via the seed coulters 26. The strip of soil between the units 2 can be worked and sown by means of the rear-mounted soil cultivating machine-seed drill combination 59 without the tractor traveling over the worked soil. Using the combination described in the foregoing and shown in Figure 1, it is possible to work and simultaneously sow the soil over a large width, which in this embodiment is approximately 6 metres, without the negative effect of tractor tracks. Due to the presence of the units 2 at the front side, it is possible to obtain a very uniform weight distribution, which significantly increases the stability, in particular during transport. The two frame portions 8, which during operation assume the position as shown for one frame portion in Figure 2, can be brought from this operating position to a semi-lifted position by means of the adjusting cylinder 63, as is shown in Figure 2. During the upward pivotal movement of the frame portions 8, obtained by means of the adjusting cylinder 63, the operating arm 70 moves via the slot 69 constituting a guide, along the housing 64 upwardly until the bevelled leading side of the portion 71 engages the stop 74 (Figure 5). This causes the locking member 72 to pivot upwardly about the shaft 65 against the action of the spring 80. As a result, the folded-over end of the blocking element 76 moves out of the V-shaped recess of the blocking member 75 and the locking member 72 is pivoted downwardly by the spring 80, so that, when the piston 62 of the adjusting cylinder 63 moves back under the influence of the weight of the frame portion 8 and the unit 2, the hook-like portion 71 engages the pin 79 (Figure 6) and the frame portion 8 is locked in the desired intermediate position. The frame portions 8 being in the intermediate position, the assembly can be turned more easily on the head land during operation. In order to return the portions 8 to the operating position, the operating arm 70 can be moved slightly upwardly by means of the adjusting cylinder 63, so that the hook-like portion 71 engages the stop 74 and the locking member 72 is moved upwards to the extent that the folded-over end of the blocking element 76 is moved into the V-shaped recess of the blocking member 75 and the locking member is made inoperative and, due to its weight, the frame portion 8 cum unit 2 is moved into the working position. When one wants to work with one unit only, e.g. when a plough is connected to the rear of the tractor instead of the combination 59, it is possible not to use the locking member 72 at the side where the work is in progress by moving the folded-over end of the blocking element 76 into a bore 72A in the locking member. After both frame portions 8 have been lifted, the relevant unit is moved to the operating position, while the other unit is maintained in the intermediate position. When one want to put the other unit into operation, then the other locking member 72 must be kept inoperative in the manner as described. The distributing mechanism 28 can optionally be closed at the one side or at the other side by means of an adjusting cylinder, when only one unit is operative. Prior to bringing the frame portions 8 cum units 2 into a transport position, the operating arms 70 must be pivoted about the shaft 61 to a position as shown in Figure 2, after the locking pin 81 has been removed. Thereafter the frame portions 8 can be hinged upwardly that far by means of the adjusting cylinders 63 that the locking member 67 hooks around the shaft 61. Simultaneously, the stepper wheel 31 is moved upwardly by means of the cylinder 38 against the action of the spring 41. In order to bring the units 2 into an operating position, the locking members 67 can be pivoted such from the tractor with the aid of the operating member 68 that the shafts 61 are released and the total assembly can move downwardly due to its weight. The two hydraulic adjusting cylinders 63, the adjusting cylinder 38 for the stepper wheel 31, the adjusting cylinder for the distributing mechanism 28 and an adjusting cylinder for markers, if any, are connected in such a way to the hydraulic circuit of the tractor that they can be simply and jointly operated, which means that, when the soil working-seed drill units 2 move into the operating position, the stepper wheel 31 and the marker, if any, also move downwardly from the transport position to the operating position. Hereby the distributing mechanism is also adjusted again to the set position. The adjustment of the distributing mechanism 28 includes a rod end 28A projecting beyond the hopper (Figures 1 and 2). The said marked end constitutes an indicator means, by means of which the adjustment of the distributing mechanism 28 can be checked from the tractor. Seen from the tractor, a far projecting rod end 28A means that the right-hand side of the distributing mechanism is engaged. In a position wherein the rod end 28A projects only slightly, the left-hand side is engaged. When both sides are engaged, the said end is in an intermediate position. In crder to prevent the units 2 from pivoting in such a manner about the shafts 13 during their adjustment to the intermediate position that the drive might be damaged by the telescopic shafts 53, the leading beam 10 of each frame portion 8 is provided with a rod 82 which is arranged pivotably between lugs on the beam 6 and the support 12. At its ends, the rod 82 is fitted with bifurcate members which are applied by means of shafts 83. At the side of the beam 6, the rod 82 is arranged with play. At the side of the support 12, the shaft 83 is movable in a slot located near the upper end of the support, the arrangement being such that during operation the units can move within limits about a shaft extending in the direction of operative travel, whilst, as soon as they are lifted, by means of the rod 82 they are kept in at least substantially the same position, so that the drive cannot be damaged in the intermediate position. If necessary, there may be provided a provision to disconnect the drive upon movement into the intermediate position. When the units 2 have been moved into the transport position as shown in Figure 2, the rods 82 ensure that the position of the units is such that the assembly obtains a transport width of three meters.

The afore-described locking mechanism, which comprises the locking member 72 and the operating arm which is movable by the adjusting cylinder, using which the locking member 72 can be moved to an inoperative or operative position, can alternatively be used with other agricultural implements.

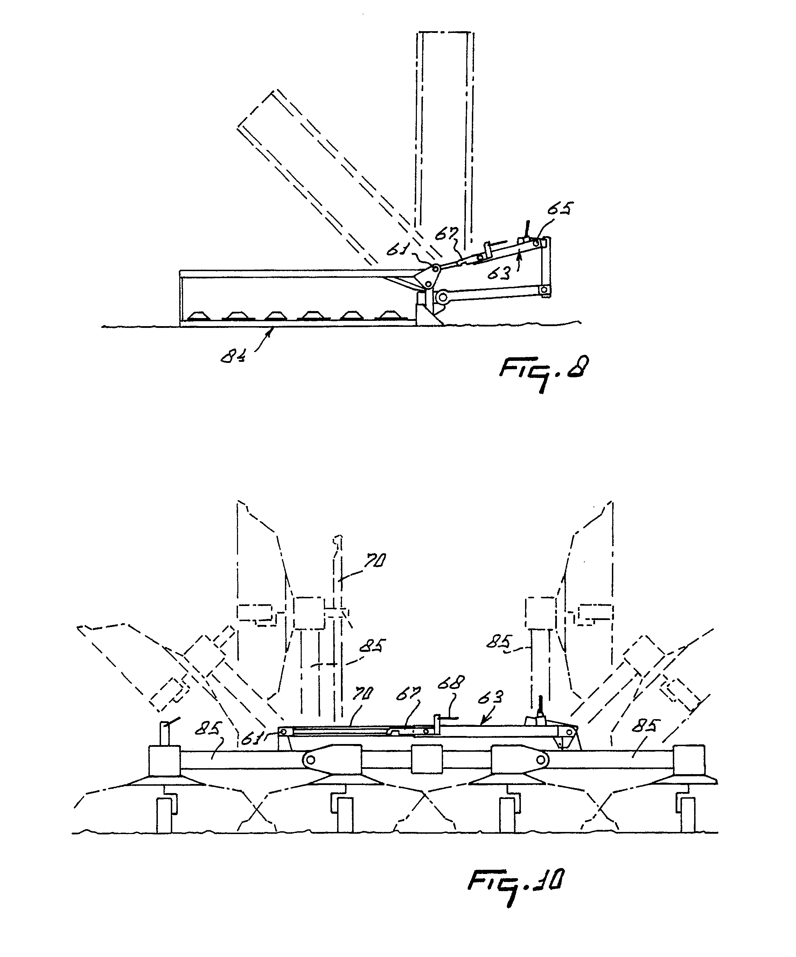

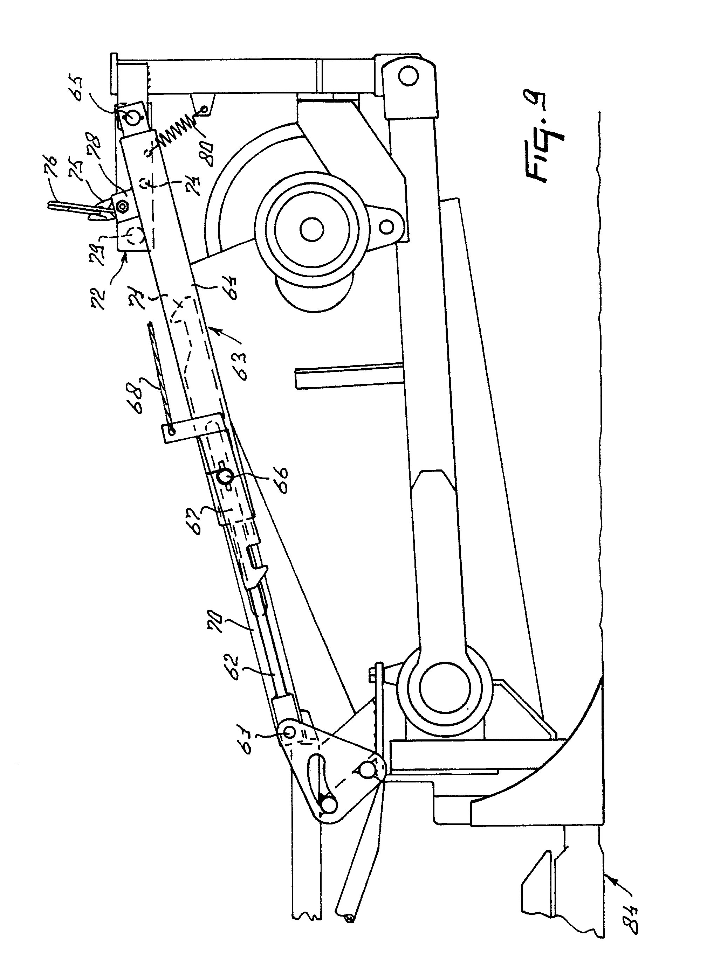

Figures 8 and 9 show an embodiment wherein the locking mechanism 63, 70, 72 of the invention is used in a mowing machine, which machine is shown schematically and whose pivotal portion 84 including the mowing implements can be brought in the manner described to an intermediate position or a transport position, respectively, as is shown in Figures 8 and 9.

The mode of operation of the locking mechanism 63, 70, 72 fully corresponds to that of the identical mechanism described in the foregoing. Also in this case, the operating arm 70, by means of which the pivotal portion 84 can be moved to a transport position, must be pivoted into a position as shown in Figure 9.

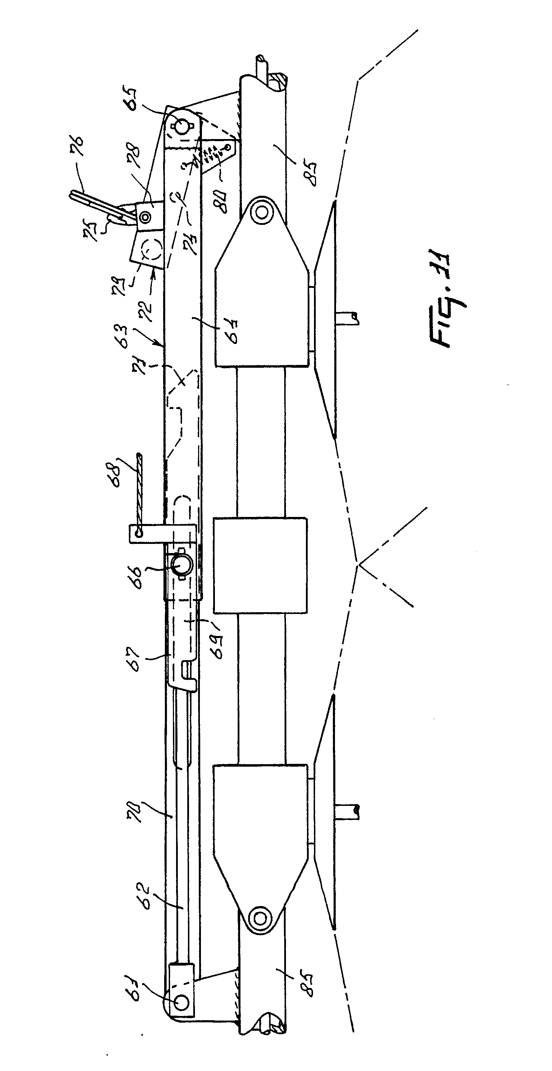

In the embodiment of Figures 10 and 11, the locking arrangement 63, 70, 72 is used in a schematically shown hay processing machine. Also in this case, the pivotal tool-bearing portions 86 can be moved into an intermediate position or a transport position, respectively, with the aid of the locking arrangement, it being necessary in the latter position to move the operating arm 70 again to the inoperative position, as is shown in Figure 10.

The invention is not limited to the above-described features but also relates to all the details shown in the drawings, whether they have been described or not.

## Claims

1. An agricultural implement, in particular a soil cultivating machine, comprising a frame which includes a first frame portion (4) that can be coupled to a tractor (1) and a second frame portion (8) that is pivotable with respect to the said first frame portion (4) and carries at least one soil working member (2), the said second frame portion (8) being lockable by means of an adjusting member (63) and a locking mechanism (70, 72) in at least one position relative to the said first frame portion (4), characterized in that the adjusting member (63) includes means, by means of which the locking mechanism (70, 72; 61, 67) can be operated, the arrangement being such that an adjustment of the adjusting member (63) can bring the locking mechanism (70, 72; 61, 67) into the operative or the inoperative state.

2. An agricultural implement as claimed in claim 1, characterized in that the means include an operating arm (70) which can be adjusted by means of the adjusting member (63).

3. An agricultural implement as claimed in claim 2, characterized in that the operating arm (70) forms part of the locking mechanism (70, 72) and can cooperate with a locking member (72) provided pivotably on the first frame portion (4).

4. An agricultural implement as claimed in claim 3, characterized in that the locking member (72) can be adjusted to an operative or an inoperative position, respectively, with the aid of the operating arm (70).

5. An agricultural implement as claimed in any one of claims 2 to 4, characterized in that the operating arm (70) extends in the longitudinal direction of the adjusting member (63).

6. An agricultural implement as claimed in any one of claims 3 to 5, characterized in that the operating arm (70) is pivotal about a shaft (61) which extends at least substantially parallel to the shaft (65), about which the locking member (72) is pivotal.

7. An agricultural implement as claimed in any one of claims 3 to 6, characterized in that the operating arm (70) is pivotal about a shaft (61), around which an end of the adjusting member (63) in the form of an adjusting cylinder is pivotal, and the locking member (72) is pivotal about a shaft (65), about which the other end of the adjusting member (63) can be adjusted.

8. An agricultural implement as claimed in claim 7, characterized in that the operating arm (70) is pivotal about the shaft, by means of which the piston rod (62) of the adjusting cylinder (63) is arranged pivotably.

9. An agricultural implement as claimed in claim 7 or 8, characterized in that the operating arm (70) includes a guide (69) for a stub (66) located on the housing (64) of the adjusting cylinder (63).

10. An agricultural implement as claimed in claim 9, characterized in that the operating arm (70) can be removed from the stub (66) and is pivotal about the pivot shaft (61) in an inoperative position.

11. An agricultural implement as claimed in any one of claims 3 to 10, characterized in that the operating arm (70) includes a hook-like portion (71) having a bevelled leading side, which can cooperate with portions (74) of the locking member (72).

12. An agricultural implement as claimed in claim 11, characterized in that the bevelled portion of the operating arm (70) can cooperate with a stop (74) on the locking member (72), the arrangement being such that by pivoting the locking member (72) is pushed into a blocked position or is lifted from a blocked position, respectively.

13. An agricultural implement as claimed in claim 12, characterized in that the locking member (72) includes a blocking member (75), which can cooperate with one end of a blocking element (76) provided on the adjusting member (63).

14. An agricultural implement as claimed in claim 13, characterized in that one end of the blocking element (76) is mounted under spring action and can be moved into or from a recess in the blocking member (75) on pivoting of the locking member (72).

15. An agricultural implement as claimed in any one of claims 11 to 14, characterized in that the locking member (72) includes a second stop (79), with which the hook-like portion (71) of the operating arm (70) can cooperate to perform the locking action, after the locking member (72) has been moved to an operative position.

16. An agricultural implement as claimed in any one of claims 3 to 15, characterized in that the locking member (72) is pivotal under spring action (80).

17. An agricultural implement as claimed in any one of the preceding claims, characterized in that the second frame portion (8) can be moved into a position suitable for transport during operation by means of the locking mechanism (61, 67).

18. An agricultural implement as claimed in any one of the preceding claims, characterized in that the adjusting member (63) also includes a locking member (67), with the aid of which the frame portion (8) is lockable in a transport position in a position wherein it is hinged upwardly through approximately 90°.

19. An agricultural implement as claimed in any one of the preceding claims, characterized in that the second frame portion (8) includes a soil working member (2) which is pivotal with respect to the frame portion (8) about a shaft (13) extending in the direction of operative travel, and means are provided to prevent pivoting of the soil working member (2) around the shaft (13) on pivoting of the frame portion (8).

20. An agricultural implement as claimed in claim 19, characterized in that the means include a rod (82) which is arranged pivotally between a support (12) on a carrier (14) for the soil working member (2) and the first frame portion (4).

21. An agricultural implement as claimed in any one of the preceding claims, characterized in that the frame is attached to the front side of the tractor (1), and a second frame portion (8) carrying the soil working member (2) for working strips of soil beside the tractor (1) is arranged on both sides of the first frame portion (4) to be coupled to the tractor.

FIG.1

FIG. 2

Fig.3

EP 0 422 721 A1

Fig.4

Fig.5

FIG. 6

FIG. 7

*Fig. 8*

*Fig. 10*

FIG. 9

Fig. 11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 057 831 (K.G.K. STARK) <br> * page 1, line 120 - page 2, line 32; figure 1. * <br> — — — | 1,13,16, 18-20. | A 01 <br> B 59/048 <br> A 01 B 73/04 |
| A | EP-A-0 316 560 (CLAAS SAULGAU GMBH) <br> * column 2, line 15 - column 3, line 6; figures 1, 2. * <br> — — — | 1,16. | |
| A | FR-A-2 443 794 (KONGSKILDE KONCERNSELSKAB A/S) <br> * pages 4 - 5; figures 3, 4. * <br> — — — | 13-15. | |
| A | US-A-3 633 680 (G.E.WOMBLE) <br> * column 2, line 60 - column 3, line 9; figure 3. * <br> — — — | 1. | |
| A | NL-A-7 600 141 (C.VAN DER LELY N.V.) <br> — — — — — | | |

| | TECHNICAL FIELDS SEARCHED (Int. Cl.5) |
|---|---|
| | A 01 B |

The present search report has been drawn up for all claims

| Place of search | Date of completion of search | Examiner |
|---|---|---|
| The Hague | 11 January 91 | WOHLRAPP R.G. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document